# EUROPEAN PATENT SPECIFICATION

(11) **EP 0 376 148 B1**
(45) Date of publication and mention of the grant of the patent: **15.09.1993**
(21) Application number: 89123581.4
(22) Date of filing: 20.12.1989
(51) Int. Cl.: A61C 19/00

(54) **An optical light guide for controlling the irradiation of a dental restorative material**
Lichtleiter zum Bestrahlen von dentalem Aufbaumaterial
Conducteur de lumière pour contrôler l'irradiation d'une substance de restauration dentaire

(30) Priority: 21.12.1988 US 287867
(43) Date of publication of application: 04.07.1990
(73) Proprietor: DEMETRON RESEARCH CORP., Danbury Connecticut 06810 (US)
(72) Inventor: Friedman, Joshua, Dr., Richfield Connecticut 06877 (US)
(74) Representative: Kinzebach, Werner, Dr.

(56) References cited:
- US-A- 3 868 513
- US-A- 4 661 070

## Description

### FIELD OF INVENTION

This invention relates to a light guide for use in combination with a light source for controlling the area of irradiation during a dental restorative procedure.

### BACKGROUND OF THE INVENTION

The use of photocurable dental materials in the practice of restorative dentistry has become increasingly important. Photocurable materials are cured by exposure to radiant energy in a preselected spectral range in either the ultraviolet or visible spectrum. Presently, such materials are used as a replacement for silver amalgam to fill cavities anteriorly and posteriorly. Photocurable materials are also used to treat prosthetic appliances in the preparation of a dental restoration, such as a crown or bridge, and to repair broken teeth. Some of the advantages of using photocurable compositions include the ease of bonding the material to the tooth structure upon initiating the polymerization irradiation, the ease of color matching and the relatively low solubility of the material. One major disadvantage in the use of a photocurable dental material is shrinkage of the material during polymerization. Shrinkage from polymerization has been determined to progress in the direction of the source of light with the degree of shrinkage being proportional to the distance from the source of energy.

In a typical class II posterior restoration, the gingival floor represents a critical area for providing a good seal between tooth structure and filling material. The gingival floor is highly caries prone because it is located in between the teeth and sometimes subgingival. These conditions make it difficult for proper home cleansing to remove bacterial plaque. Thus, it is extremely important to achieve a good seal at the gingival floor of a restoration and to prevent microleakage which often results in tooth sensitivity and the development of a carious lesion.

In general, the dentist irradiates the photocurable material using a curing light which is directed to the site of the restoration through a light guide such as a fiber optic rod. The light guide is held in a direction so that maximum light energy strikes the occlusal surface, which corresponds to the direction that the restorative filling material is inserted.

Document US-A-3 868 513 disloses an ultraviolet radiation projector suitable for this kind of irradiation. It comprises a radiation piping rod of ultraviolet conducting material. An inner end portion of the rod is coupled to the radiation source. An outer end portion of the rod is suitable for directing radiation to a small area of a tooth surface.

### SUMMARY OF THE INVENTION

It has been discovered in accordance with the present invention that applying irradiation to the photocurable material uniformly and simultaneously from the labial and lingual sides of the dental restoration instead of the occlusal by means of the light guide according to claim 1 improves adaptation of the restoration material to the cavity walls. The light guide of the present invention is adapted to be used with a conventional source of light for accomplishing the foregoing and comprises: a short length of an optically conducting member for conducting optical energy from said source of light, and a bifurcated section extending from said member and including at least two arms of optically conducting material with each arm having a distal end spaced apart from and facing each other for directing optical energy uniformly from opposing sides corresponding to the labial and lingual sides of the dental restoration. Further preferred features of the invention are indicated in claims 3-8.

Other features, objects and advantages of the present invention will become apparent from the specification and drawings.

### DRAWINGS

Figure 1 is a perspective view of the light guide of the present invention arranged in juxtaposition to a tooth structure to be restored by irradiating the tooth structure from its labial and lingual sides;
Figure 2 is an end view of the light guide of the present invention taken along the lines 2-2 of Figure 1; and
Figure 3 shows the light guide of Figure 1 connected to a conventional hand-held dental curing light source, with the light source shown in phantom.

### DETAILED DESCRIPTION OF THE INVENTION

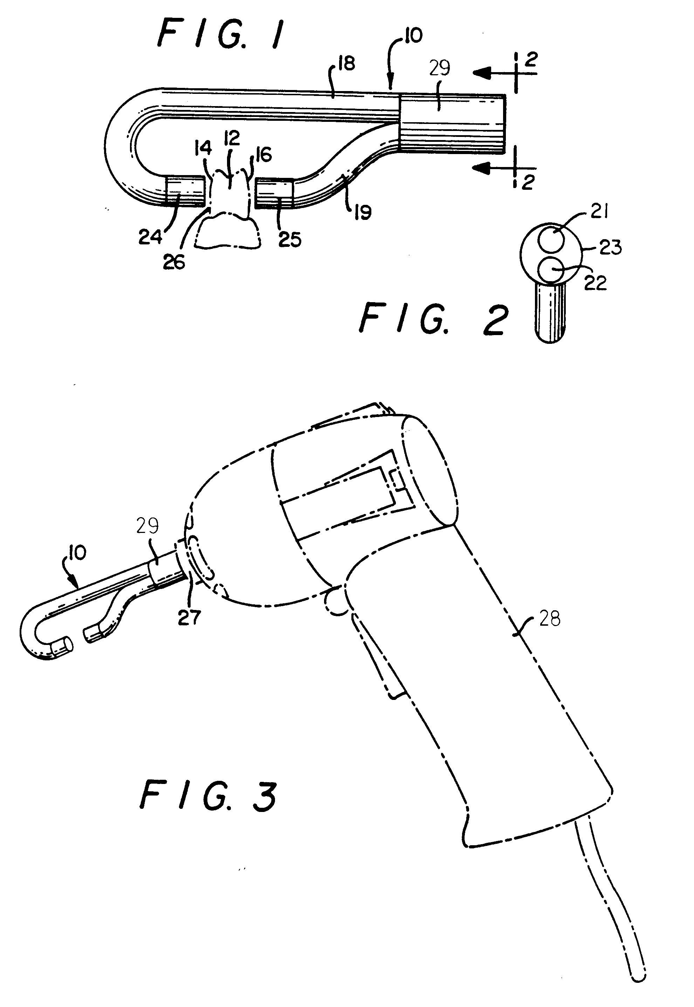

Referring now to Figures 1-3 inclusive which show the light guide (10) of the present invention for transmitting radiant energy to a vital tooth structure (12) (shown in phantom) from two opposing sides (14) and (16), representing the labial or buccal and lingual sides of the tooth. The dental procedure may represent filling the tooth with a conventional photocurable dental material which is inserted into the tooth structure (12) through the occlusal surface after removal of decay. The photocurable material may be selected from any commercially available dental composite capable of being polymerized by visible or ultraviolet light including, for example, "Durafill" or "Estilux," trademark products of Kulzer Inc., "Prisma Fill," a trademark product of L.D. Caulk, "Herculite," a trademark product of Kerr Manufacturing Company, "Occlusin," a trademark product of ICI and sold by Coe, "Silux," a trademark product of 3M Company, and Visio-Dispers, a trademark product of ESPE and sold by Priemer.

The light guide (10) includes two fiber optic conductors (18) and (19), each having proximal ends (21) and (22) and distal ends (24) and (25). The proximal ends (21) and (22) are mounted in a common sleeve (23) which is adapted to be inserted into a conventional source of radiant energy such as a halogen lamp. The distal ends (24) and (25) are spaced a predetermined distance apart in an opposing relationship. The spacing between the distal ends (24) and (25) forms a gap (26) for positioning the light guide (10) in the mouth of a dental patient, with the distal ends (24) and (25) adjacent the labial (14) and lingual (16) sides of the tooth structure. The spacing may be altered to fit anterior or posterior teeth. The conducting members (18) and (19) may each be a fiber optic rod of glass, quartz or plastic composition.

Although the distal ends (24) and (25) are shown to have a cylindrical configuration, any cross-sectional geometry may be used to more closely conform the distal end to the shape of the tooth.

The proximal ends (21) and (22) are axially aligned in the sleeve casing (29), which is adapted for insertion into a hand-held light gun (28). Any conventional light curing gun (28) or a flexible fiber optic light guide may be used. An adapter (27) may be used to provide a proper fitting to insert the sleeve into the light source (28). In general, the light source (28) will contain a source of radiant energy (not shown) such as a halogen, mercury vapor, short arc xenon or metal halide lamp, a reflector for directing the radiant energy to a common point adjacent the position of the adapter (27) at the interface with the light guide (10), a filter assembly for filtering light generated from the lamp so as to pass the desired spectral waveband and a control for providing adjustment of power to the lamp.

Optical energy is transmitted from the light source (28) into the light guide (10) which redirects the radiant energy through the optical conductors (18) and (19) to achieve uniform irradiation in the gap (26) from opposite directions through the distal ends (24) and (25) of the light guide (10). The configuration of the conductors (18) and (19) is not critical and is preferably of any shape which is readily insertable into the mouth of a patient to cure the tooth structure (12).

## Claims

1. A light guide (10) for use in combination with a light source (28) for irradiating a dental restoration (12) having a first end for coupling to said light source (28) and a second end for directing optical energy to the dental restoration (12)
characterized in that
it is constituted by two optical conductors (18, 19) each having a common proximal end (21, 22) for coupling to said light source (28) and forming said first end,
and each having a distal end (24, 25) spaced apart to form a gap (26) and forming said second end, said gap (26) being adapted to be juxtaposed about opposite sides (14, 16) of the dental restoration (12) into which light is uniformly directed from such opposite sides (14, 16).

2. A light guide, as claimed in claim 1,
comprising a short length of an optically conducting member adapted to be coupled to said light source (28) for conducting radiant energy from said light source (28), said optically conducting member having a bifurcated section including at least said two optical conductors (18, 19) extending from said member.

3. A light guide, as claimed in claim 1 or 2, wherein said optical conductors (18, 19) are composed of optically conducting material selected from the class consisting of glass, quartz or plastic composition.

4. A light guide, as defined in one of claims 1-3, wherein each proximal end (21, 22) of each optical conductor (18, 19) is mounted in a common sleeve (23) adapted to be removably coupled to said light source (28).

5. A light guide, as defined in one of claims 1-4, wherein said light source (28) is a light-curing gun (28) containing a source of radiant energy selected from the group consisting of a halogen, mercury vapor, short-arc xenon, or metal halide lamp.

6. A light guide, as defined in one of claims 1-5, wherein each distal end (24, 25) of each optical conductor (18, 19) has a cylindrical cross-sectional geometry.

7. A light guide, as defined in one of claims 1-5, wherein each distal end (24, 25) of each optical conductor (18, 19) is of a cross-sectional geometry conforming to the shape of the dental restoration.

8. A light guide, as defined in one of claims 1-7, wherein each optical conductor (18, 19) is composed of a fiber optic rod of glass, quartz or plastic composition.

## Patentansprüche

1. Lichtleiter (10) zum Gebrauch in Kombination mit einer Lichtquelle (28) zur Bestrahlung eines Zahnersatzes (12), mit einem ersten Ende zum Ankoppeln an die Lichtquelle (28) und einem zweiten Ende, um optische Energie zu dem Zahnersatz (12) zu leiten,
**dadurch gekennzeichnet,** daß
er aus zwei optischen Leitern (18, 19) besteht, von denen jeder ein gemeinsames proximales Ende (21, 22) zum Ankoppeln an die Lichtquelle (28) aufweist, welches das erste Ende darstellt, und jeder ein distales Ende (24, 25) aufweist, wobei die beiden Enden räumlich so getrennt sind, daß sie eine Lücke (26) definieren und das zweite Ende darstellen, wobei die Lücke (26) so ausgebildet ist, daß sich die Enden an gegenüberliegenden Seiten (14, 16) des Zahnersatzes (12) befinden, auf welchen Licht von den gegenüberliegenden Seiten (14, 16) gleichmäßig gerichtet wird.

2. Lichtleiter nach Anspruch 1,
mit einem kurzen optischen Leitungselement, das zum Ankoppeln an die Lichtquelle (28) geeignet ist, um Strahlungsenergie der Lichtquelle (28) zu leiten, wobei das optische Leitungselement einen gegabelten Bereich aufweist, der mindestens die zwei optischen Leiter (18, 19) enthält, die von dem Element ausgehen.

3. Lichtleiter nach Anspruch 1 oder 2,
bei dem die optischen Leiter (18, 19) aus optisch leitendem Material bestehen, das aus der Klasse Glas, Quarz oder Kunststoff ausgewählt wird.

4. Lichtleiter nach einem der Ansprüche 1 bis 3,
bei dem jedes proximale Ende (21, 22) von jedem optischen Leiter (18, 19) in einer gemeinsamen Hülse (23) montiert ist, die lösbar mit der Lichtquelle (28) verbindbar ist.

5. Lichtleiter nach einem der Ansprüche 1 bis 4,
bei dem die Lichtquelle (28) eine lichthärtende Pistole (28) ist, die eine Strahlungsenergiequelle enthält, ausgewählt aus der Gruppe der Halogen-, Quecksilberdampf-, Kurz-Lichtbogenxenon- oder Metallhalogenlampen.

6. Lichtleiter nach einem der Ansprüche 1 bis 5,
bei dem jeweils das distale Ende (24, 25) jedes optischen Leiters (18, 19) im Querschnitt eine zylindrische Geometrie aufweist.

7. Lichtleiter nach einem der Ansprüche 1 bis 5,
bei dem jeweils das distale Ende (24, 25) jedes optischen Leiters (18, 19) im Querschnitt eine mit der Form des Zahnersatzes übereinstimmende Geometrie aufweist.

8. Lichtleiter nach einem der Ansprüche 1 bis 7,
bei dem jeder optische Leiter (18, 19) aus einem Stab aus optischen Fasern aus Glas, Quarz oder einer Kunststoffzusammensetzung besteht.

## Revendications

1. **Guide de lumière** (10) destiné à être utilisé en combinaison avec une source lumineuse (28) pour irradier une réparation dentaire (12) présentant une première extrémité pour le couplage à ladite source lumineuse (28) et une seconde extrémité pour diriger l'énergie optique sur la réparation dentaire (12), caractérisé en ce qu'il est constitué de deux conducteurs optiques (18, 19) présentant chacun une extrémité proximale commune (21, 22) pour le couplage à ladite source lumineuse (28) et formant ladite première extrémité, et présentant chacun une extrémité distale (24, 25) écartées pour former un espace (26) et formant ladite seconde extrémité, ledit espace (26) étant adapté pour être juxtaposé autour de côtés opposés (14, 16) de la réparation dentaire (12) dans lequel la lumière est dirigée uniformément à partir de ces côtés opposés (14, 16).

2. **Guide de lumière** suivant la revendication 1, comprenant un court tronçon d'un élément optiquement conducteur adapté pour être couplé à ladite source lumineuse (28) pour conduire de l'énergie rayonnante à partir de ladite source lumineuse (28), ledit élément optiquement conducteur présentant une section bifurquée comportant au moins lesdits deux conducteurs (18, 19) s'étendant à partir dudit élément.

3. **Guide de lumière** suivant la revendication 1 ou 2, dans lequel lesdits conducteurs optiques (18, 19) sont réalisés en un matériau optiquement conducteur choisi parmi le groupe composé de verre, quartz ou composition de matière plastique.

4. **Guide de lumière** suivant l'une des revendications 1 à 3, dans lequel chaque extrémité proximale (21, 22) de chaque conducteur optique (18, 19) est montée dans un manchon commun (23) adapté pour être couplé, de manière amovible, à ladite source lumineuse (28).

5. **Guide de lumière** suivant l'une des revendications 1 à 4, dans lequel ladite source lumineuse (28) est un pistolet photodurcissable (28) contenant une source d'énergie rayonnante choisie parmi le groupe composé d'une lampe halogène, à vapeur de mercure, au xénon à arc court ou à halogénure métallique.

6. **Guide de lumière** suivant l'une des revendications 1 à 5, dans lequel chaque extrémité distale (24, 25) de chaque conducteur optique (18, 19) présente une géométrie à section cylindrique.

7. **Guide de lumière** suivant l'une des revendications 1 à 5, dans lequel chaque extrémité distale (24, 25) de chaque conducteur optique (18, 19) est d'une géométrie à section s'adaptant à la forme de la réparation dentaire.

8. **Guide de lumière** suivant l'une des revendications 1 à 7, dans lequel chaque conducteur optique (18, 19) se compose d'une tige de fibre optique en verte, quartz ou composition de matière plastique.
